# EUROPÄISCHE PATENTANMELDUNG

(11) **EP 0 961 508 A2**
(43) Veröffentlichungstag der Anmeldung: **01.12.1999**
(21) Anmeldenummer: 99108335.3
(22) Anmeldetag: 28.04.1999
(51) Int. Cl.: H04Q 3/62

(54) **Verfahren und Telekommunikationssystem zum Übermitteln von Daten von einer ersten zu einer zweiten Nebenstellenanlage**

(30) Priorität: 29.05.1998 DE 19824161
(71) Anmelder: SIEMENS AKTIENGESELLSCHAFT, 80333 München (DE)
(72) Erfinder: Feyaerts, Johan, 2370 Arendonk (BE)

(57) **Zusammenfassung**

Beschrieben wird ein Verfahren und ein Telekommunikationssystem zum Übermittlen von Daten von einer ersten (10) zu einer zweiten Nebenstellenanlage (16). Die Daten bestehen aus Nutzdaten, z.B. Sprachdaten, und Steuerdaten zur Steuerung einer Nebenstellenanlage, wobei die Steuerdaten Informationen über Dienstmerkmale der Nebenstellenanlagen enthalten. Der Austausch der Daten erfolgt in Form von Datenpaketen über ein Rechnerverbundnetz (14).

## Beschreibung

Die Erfindung betrifft ein Verfahren zum Übermitteln von Daten von einer ersten zu einer zweiten Nebenstellenanlage in einem Privatnetz. Ferner betrifft die Erfindung ein Telekommunikationssystem.

Um Teilnehmern in einem Telefonnetz bestimmte Dienstmerkmale, wie z.B. die Anzeige von Informationen über den anrufenden Teilnehmer, anbieten zu können, werden zusätzlich zu den Nutzdaten, z.B. Sprachdaten, auch Steuerdaten übertragen. Diese Steuerdaten beinhalten Anweisungen an eine Vermittlungsstelle. Ein Beispiel für eine solche Anweisung an die Vermittlungsstelle ist die Rufweiterleitung, d.h. alle Anrufe, die zu einem bestimmten Endgerät gehen, sollen an ein anderes Endgerät weitergeleitet werden. Dieses Verfahren wird im öffentlichen Telefonnetz und in Nebenstellenanlagen, die z.B. von Firmen eingesetzt werden, angewendet.

In einem Protokoll ist festgelegt, wie Verbindungen zwischen den Teilnehmern in einem Telefonnetz aufgebaut werden, welche Dienstmerkmale im Telefonnetz angeboten werden und wie Nutz- und Steuerdaten zu übertragen sind. Ein Beispiel für ein solches Protokoll ist das "QSIG"-Protokoll, Verbindungen zwischen Teilnehmern in verschiedenen Nebenstellenanlagen werden hierbei über das öffentliche Telefonnetz geführt. Dabei tritt das Problem auf, daß die Dienstmerkmale, die ausschließlich von den Nebenstellenanlagen und nicht vom öffentlichen Telefonnetz angeboten werden, nicht genutzt werden können, da das öffentliche Telefonnetz keine Möglichkeit bietet, die benötigten Steuerdaten zu übertragen.

Eine bekannte Lösung für diese Einschränkung ist die Verwendung einer Festverbindung zwischen den Nebenstellenanlagen über das öffentliche Telefonnetz. Nachteilig an dieser Lösung ist jedoch die begrenzte Übertragungskapazität der Festverbindung, die nicht an eine momentan benötigte Übertragungskapazität angepaßt werden kann. Für ein Netz mit mehreren Nebenstellenanlagen, das als Privatnetz bezeichnet wird, läßt sich nur mit großem Aufwand eine optimale Anordnung der Festverbindung finden. Eine Änderung der Anzahl zu verbindender Nebenstellenanlagen erfordert auch eine Anpassung der Anordnung der Festverbindungen. Außerdem ist der Aufbau eines solchen Privatnetzes relativ aufwendig.

Es ist Aufgabe der Erfindung, ein Verfahren zum Austausch von Daten zwischen Nebenstellenanlagen bzw. ein Telekommunikationssystem bereitzustellen, das die Verwendung der Dienstmerkmale der Nebenstellenanlagen bei geringem Aufwand ermöglicht.

Die Erfindung löst die Aufgabe durch die Merkmale des Patentanspruchs 1 bzw. des nebengeordneten Patentanspruchs 16. Vorteilhafte Weiterbildungen sind in den Unteransprüchen angegeben.

Gemäß der Erfindung, hat jede Nebenstellenanlage Zugang zu einem Rechnerverbundnetz, das zur Übertragung von Datenpaketen benutzt wird. Mit Hilfe dieses Rechnerverbundnetzes werden die Nutz- und Steuerdaten zwischen den Nebenstellenanlagen ausgetauscht.

In einem Nummernplan sind alle Teilnehmer des Privatnetzes mit der ihnen jeweils zugewiesenen Nebenstellenanlage aufgeführt. Nachdem ein rufender Teilnehmer eine Nummer gewählt hat, überprüft die Nebenstellenanlage anhand des Nummernplanes, ob diese Nummer zu einem Endgerät der eigenen Nebenstellenanlage verweist. Gehört die Nummer zu einem Endgerät in einer anderen Nebenstellenanlage, leitet sie die Nutz- und Steuerdaten an einen Umsetzer weiter. Als Nutzdaten kommen in erster Linie Sprachdaten in Betracht.

Dieser Umsetzer trennt die Daten des rufenden Teilnehmers in Nutzdaten und Steuerdaten auf, bestimmt eine Zieladressinformation, mit deren Hilfe die Daten zu einem zweiten Umsetzer übermittelt werden können und gibt die Daten an eine erste Vermittlungseinheit weiter. Die erste Vermittlungseinheit öffnet eine Verbindung zum Rechnerverbundnetz und bildet aus den Nutz- und Steuerdaten Datenpakete, die sie über das Rechnerverbundnetz an eine zweite Vermittlungseinheit sendet. Die zweite Vermittlungseinheit fügt die empfangenen Datenpakete wieder zu einem Nutzdaten- und einem Steuerdatenstrom zusammen und leitet sie an den zweiten Umsetzer weiter. Der zweite Umsetzer fügt die Nutz- und Steuerdaten zusammen und übermittelt sie an die mit ihm verbundene zweite Nebenstellenanlage, die durch die übermittelten Steuerdaten gesteuert werden kann.

Das erfindungsgemäße Verfahren ermöglicht es, eine beliebige Anzahl von Nebenstellenanlagen zu einem Privatnetz zusammenzufassen. Für eine Erweiterung des Privatnetzes wird der Nummernplan des Privatnetzes um die Nummern der zu integrierenden Nebenstelle erweitert und im gesamten Privatnetz bekanntgemacht.

Eine bevorzugte Weiterentwicklung der Erfindung benutzt zur Übertragung der Daten ein Verfahren, das durch das Internet Protocol IP definiert ist. Das Internet Protocol IP legt fest, wie die Nutz- und Steuerdaten in Datenpakete aufgeteilt und transportiert werden und definiert ein Format für Adressen von Rechnern in dem Rechnerverbundnetz. Damit kann für die Erfindung sowohl das Internet als auch ein Intranet benutzt werden.

Nachfolgend werden vier Ausführungsformen für den Datenaustausch zwischen der Nebenstellenanlage und dem Rechnerverbundnetz beschrieben: Bei einer ersten Ausführungsform enthält die Nebenstellenanlage den Umsetzer und die Vermittlungseinheit. Die Nebenstellenanlage schickt die Steuerdaten über eine erste logische Verbindung und die Nutzdaten über eine zweite logische Verbindung zum Rechnerverbundnetz. Für die Übertragung der Daten über die erste und zweite logische Verbindung kann dieselbe physikalische Verbindung genutzt werden. Diese Ausführungsform eignet sich besonders für Nebenstellenanlagen mit geringem Gesprächsaufkommen zu anderen Nebenstellenanlagen, die zum Privatnetz gehören.

Bei einer zweiten Ausführungsform ist die Nebenstellenanlage mit einem Vermittlungsrechner verbunden, der die Nutz- und Steuerdaten an das Rechnerverbundnetz weiterleitet. Bei dieser Ausführungsform übermittelt die Nebenstellenanlage die Nutz- und Steuerdaten über getrennte Verbindungen an den Vermittlungsrechner. Für die Übertragung der Steuerdaten kann ein Verfahren benutzt werden, das durch das bekannte X.25-Protokoll festgelegt wird. Für die Übertragung der Nutzdaten kann eine Telefonverbindung eingesetzt werden, z.B. eine ISDN-Verbindung.

Bei einer dritten Ausführungsform werden die Aufgaben des Umsetzers und des Vermittlungsrechners von einem gemeinsamen Rechner übernommen. Die Nebenstellenanlage tauscht die Nutz- und Steuerdaten über eine Telefonverbindung mit dem Rechner aus. Dieser Rechner trennt die Nutz- und Steuerdaten und bereitet sie so auf, daß sie vom Rechnerverbundnetz an die zweite Nebenstellenanlage übertragen werden können. Für die Kommunikation zwischen der Nebenstellenanlage und dem Rechner kann beispielsweise ein Verfahren benutzt werden, das durch das bekannte QSIG-Protokoll oder ein anderes Protokoll für Privatnetze, z.B. DPNSS oder Cornet-N., beschrieben wird.

Bei einer vierten Ausführungsform werden die Funktionen des Umsetzers und die Kommunikation mit dem Rechnerverbundnetz von jeweils eigenständigen Rechnern übernommen. Die Kommunikation zwischen Nebenstellenanlage und Umsetzer kann z.B. nach dem durch das QSIG-Protokoll definierte Verfahren erfolgen. Für die Übertragung der Steuerdaten vom Umsetzer zum Vermittlungsrechner kann das durch das X.25-Protokoll oder ein anderes Protokoll zur verbindungsorientierten Datenübertragung definierte Verfahren benutzt werden, während die Nutzdaten vorzugsweise über eine Telefonverbindung zum Vermittlungsrechner geschickt werden.

Das X.25-Protokoll beschreibt ein Verfahren zur verbindungsorientierten Übertragung von Datenpaketen. Dabei werden die Datenpakete mehrerer Sender von einem Multiplexer über eine Datenleitung übermittelt. Es ist denkbar, das Verfahren zur Datenübertragung, nach dem X.25-Protokoll, so anzupassen, daß auf den Multiplexer verzichtet werden kann und die Daten asynchron übertragen werden können. Eine mögliche Ausführungsform dieses angepaßten Verfahrens, ist das Einfügen von Steuerzeichen zur Trennung der Datenblöcke. Diese Datenblöcke werden aus den Datenpaketen nach einem durch das "High Level Data Link Control"-Protokoll, kurz HDLC-Protokoll, festgelegtem Verfahren gebildet. Für den Beginn des Datenblocks kann z.B. das Symbol "Start of Text", kurz STX, und für das Ende des Datenblocks das Symbol "End of Text", kurz ETX, benutzt werden.

Ferner ist es sinnvoll, daß der Umsetzer dem ersten Vermittlungsrechner die IP-Adresse des zweiten Vermittlungsrechners mitteilt. Dazu kann beispielsweise im Adreßfeld eines Datenpaketes, mit dem die X.25-Verbindung zwischen dem Umsetzer und dem ersten Vermittlungsrechner hergestellt wird, die IP-Adresse des zweiten Vermittlungsrechners gespeichert werden. Damti wird vermieden, daß im Vermittlungsrechner Tabellen zur Übersetzung der X.25-Adressen in IP-Adressen angelegt und gepflegt werden müssen. In einer bevorzugten Ausführungsform werden hierfür die letzten vier Bytes des Adreßfeldes benutzt.

Zusätzlich kann das erfindungsgemäße Verfahren dahingehend erweitert werden, daß, falls die Datenübertragung über das Rechnerverbundnetz nicht zustande kommt, die Nebenstellenanlage versucht, die Datenübertragung über ein anderes Rechnerverbundnetz oder eine Festverbindung durchzuführen.

Es ist vorteilhaft, das erfindungsgemäße Verfahren so zu erweitern, daß sich ein anrufender Umsetzer gegenüber einem angerufenen Umsetzer identifiziert. Dies ermöglicht es, mehrere Umsetzer in einem Privatnetz einzusetzen. Dazu können z.B. "Direct Dialing In"-Nummern, kurz DDI-Nummern, vereinbart werden. In einer ersten Ausführungsform wird jedem Umsetzer mindestens eine DDI-Nummer zugewiesen. Der anrufende Umsetzer verschickt diese Nummer zusätzlich zu den Nutz- und Steuerdaten an den angerufenen Umsetzer. Diese Ausführungsform kann eingesetzt werden, wenn der erste Vermittlungsrechner die Nummer des anrufenden Umsetzers an den zweiten Vermittlungsrechner mitschickt.

In einer weiteren Ausführungsform wird jeder Kombination von anrufendem und angerufenen Umsetzer eine DDI-Nummer zugewiesen. Der anrufende Umsetzer übersetzt die Nummer, die von einem Teilnehmer gewählt wurde, in die DDI-Nummer des angerufenen Umsetzers. Damit erkennt der angerufene Umsetzer anhand der ergänzten Nummer den anrufenden Umsetzer. Die Identifizierung des anrufenden Umsetzers ermöglicht es dem angerufenen Umsetzer eine Verbindung zu dem anrufenden Umsetzer aufzubauen, um Steuerdaten an den anrufenden Umsetzer zu übertragen.

Gemäß einem weiteren Aspekt der Erfindung wird eine Telekommunikationsanlage gemäß Anspruch 15 angegeben.

Nachfolgend wird ein Beispiel der Erfindung anhand der Zeichnungen näher erläutert. Darin zeigen:
- Figur 1: schematisch den Aufbau eines Netzes von Nebenstellenanlagen,
- Figur 2: den schematischen Aufbau einer Telefonverbindung zwischen zwei Nebenstellenanlagen,
- Figur 3: die Abfolge von Verfahrensschritten bis zum Beginn des Aufbaus der Telefonverbindung,
- Figur 4: die Fortsetzung des Aufbaus der Telefonverbindung bis zum Öffnen der Verbindungen zwischen den Vermittlungsrechnern,
- Figur 5: die Fortsetzung des Aufbaus der Telefonverbindung bis zum Senden der Daten an einen Emulator, und
- Figur 6: das Beenden des Aufbaus der Telefonverbindung.

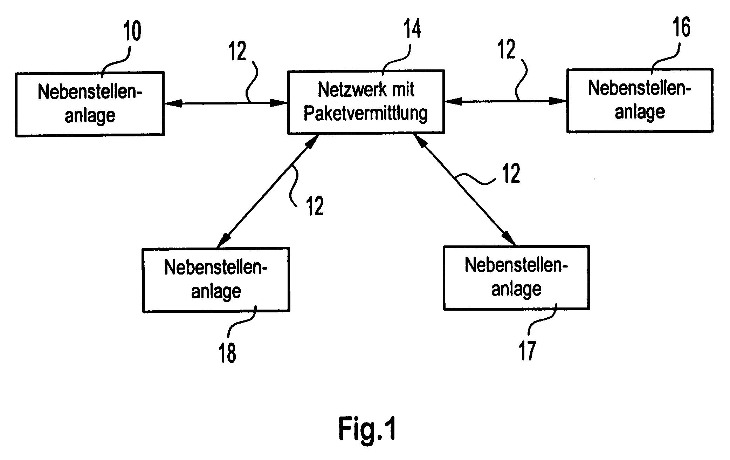

In Figur 1 ist als Ausführungsbeispiel für die Erfindung ein Netz mit vier Nebenstellenanlagen 10, 16, 17,18 schematisch dargestellt. Für das Netz der Nebenstellenanlagen 10, 16, 17,18 ist ein Nummernplan vereinbart, der jedem an die Nebenstellenanlagen 10, 16, 17,18 angeschlossenen Teilnehmer eine Nummer zuordnet. Dieser Nummernplan ist in allen Nebenstellenanlagen 10, 16, 17,18 bekannt. Anhand dieses Nummernplanes stellt die jeweilige Nebenstellenanlage 10, 16, 17,18 fest, zu welcher Nebenstellenanlage 10, 16, 17,18 der gerufene Teilnehmer gehört, dessen Nummer ein rufender Teilnehmer gewählt hat.

Jede Nebenstellenanlage 10, 16, 17,18 ist über eine Verbindung 12 mit einem Rechnerverbundnetz 14 verbunden, das zur Datenübertragung benutzt wird. Für die Übermittlung der Daten im Rechnerverbundnetz 14 wird das bekannte Internet Protocol IP benutzt. Dieses Internet Protocol IP ist verantwortlich für die Aufspaltung der zu übermittelnden Daten in Datenpakete. Diese Datenpakete werden über das Rechnerverbundnetz 14 übertragen und am Zielort wieder zusammengesetzt. Das Internet Protocol IP legt auch Adressen für Rechner fest, zwischen denen Daten übertragen werden sollen. Eine solche Adresse wird als IP-Adresse bezeichnet. Es können auch andere Protokolle für paketvermittelnde Rechnerverbundnetze eingesetzt werden. Voraussetzung ist, daß das Protokoll eine ausreichende Datenübertragungsrate ermöglicht.

Über die Verbindung 12 werden sowohl Nutz- als auch Steuerdaten zwischen dem Rechnerverbundnetz 14 und der Nebenstellenanlage 10, 16, 17, 18 übertragen. Zu den Nutzdaten gehören neben der digitalisierten Sprache auch Informationen, die zum Aufbau und Abbau einer Telefonverbindung notwendig sind. Die Steuerdaten umfassen Daten für die Durchführung von Dienstmerkmalen, die nur von diesen Nebenstellenanlagen 10, 16, 17,18 zur Verfügung gestellt werden können.

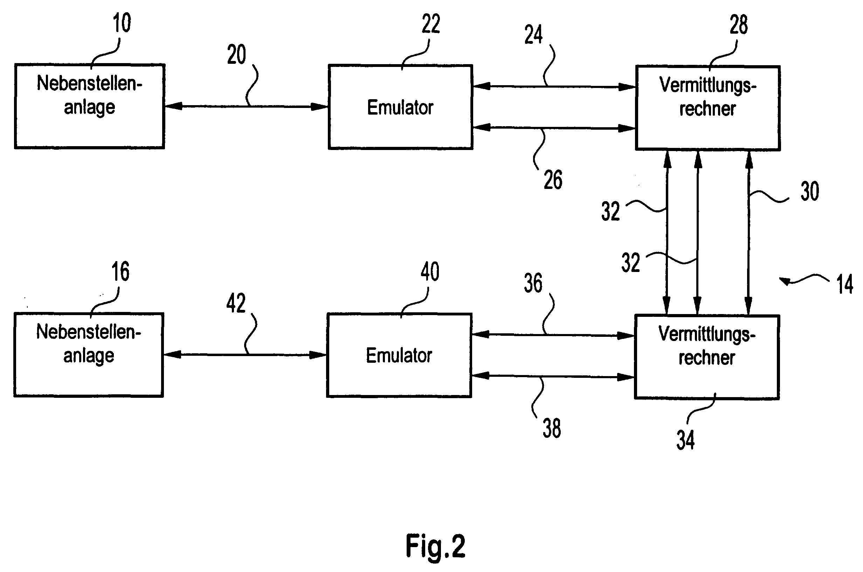

Figur 2 zeigt als Beispiel für die Anwendung der Erfindung die Telefonverbindung zwischen den beiden Nebenstellenanlagen 10 und 16. Von der Nebenstellenanlage 10 werden Daten über eine Verbindung 20 an einen Emulator 22 geschickt. Diese Daten setzen sich, wie erwähnt, aus Nutz- und Steuerdaten zusammen.

Der Emulator 22 stellt für die Übertragung der Steuerdaten eine Verbindung 24 zu einem Vermittlungsrechner 28 her. Der Vermittlungsrechner 28 bietet einen Zugang zum Rechnerverbundnetz 14. Für die Übertragung der Steuerdaten wird das bekannte X.25-Protokoll benutzt. Dieses X.25-Protokoll definiert ein Verfahren zum Datenaustausch zwischen zwei Rechnern, bei dem die Daten in Form von Datenpaketen übermittelt werden. Es kann aber auch ein beliebiges anderes Protokoll zur verbindungsorientierten Datenübertragung benutzt werden.

Bevor die Verbindung 24 aufgebaut wird, stellt der Emulator 22 die IP-Adresse eines Vermittlungsrechners 34 fest, an den die Steuerdaten zu schicken sind. Die IP-Adresse des Vermittlungsrechners 34 ist in einem Adreßfeld der Datenpakete enthalten, die der Emulator 22 an den Vermittlungsrechner 28 schickt. Dieses Adreßfeld enthält zusätzlich die Adresse des Emulators 22 und die Adresse eines weiteren Emulators 40. Der Emulator 40 steuert die Kommunikation zwischen dem Vermittlungsrechner 34 und der Nebenstellenanlage 16.

Über eine Verbindung 26 werden die Nutzdaten vom Emulator 22 an den Vermittlungsrechner 28 weitergeleitet. Für die Verbindung 26 kann z.B. eine analoge ISDN-, Euro-ISDN- oder T1-Verbindung verwendet werden. Die T1-Verbindung ist eine Standleitung, die nach den Vorgaben des bekannten T1-Standards aufgebaut wird. Der Emulator 22 ergänzt die gewählte Nummer um eine Ortsnetz- und eine Länderkennzahl, die den Emulator 40 identifizieren. Mit Hilfe dieser Ergänzung kann der Vermittlungsrechner 28 die IP-Adresse des Vermittlungsrechners 34 bestimmen.

Der Vermittlungsrechner 28 stellt über das Rechnerverbundnetz 14 eine Verbindung 30 zum Vermittlungsrechner 34 her, über die die Steuerdaten übertragen werden. Für die Übermittlung der Nutzdaten werden eine oder mehrere Verbindungen 32 zwischen den beiden Vermittlungsrechnern 28 und 34 aufgebaut. Die Anzahl der Verbindungen 32 hängt von der Anzahl der zu übertragenden Nutzdaten je Zeiteinheit ab.

Der Vermittlungsrechner 34 leitet die empfangenen Steuerdaten über eine Verbindung 36 an den Emulator 40 weiter. Die über die Verbindungen 32 empfangenen Nutzdaten werden vom Vermittlungsrechner 34 wieder zusammengesetzt und über eine Verbindung 38 an den Emulator 40 geschickt. Für die Übertragung über die Verbindung 36 wird wieder das X.25-Protokoll benutzt. Bei der Verbindung 38 kann es sich z.B. um eine analoge ISDN-, Euro-ISDN oder T1-Verbindung handeln. Bei der Übertragung der Nutzdaten über die Verbindungen 26 und 38 werden nur grundlegende Steuerinformationen benutzt.

Der Emulator 40 setzt die Steuerdaten und die Nutzdaten wieder so zusammen, wie sie von der Nebenstellenanlage 10 an den Emulator 22 gesandt worden waren. Die zusammengesetzten Daten schickt er über eine Verbindung 42 an die Nebenstellenanlage 16, zu der der angerufene Teilnehmer gehört, dessen Nummer der rufende Teilnehmer in der Nebenstellenanlage 10 gewählt hatte.

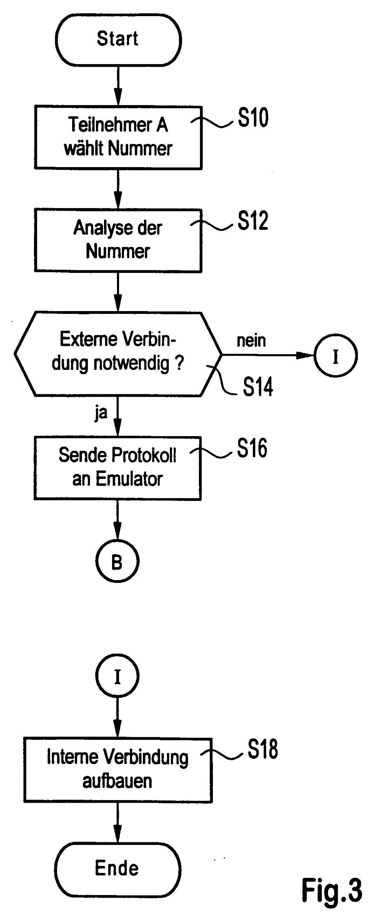

Die Figuren 3 bis 6 zeigen Abschnitte eines Flußdiagramms für den Verbindungsaufbau einer Telefonverbindung zwischen einem rufenden Teilnehmer A in der Nebenstellenanlage 10 und einem angerufenen Teilnehmer B in der Nebenstellenanlage 16. Figur 3 stellt die Verfahrensschritte bis zum Beginn des Verbindungsaufbaus dar. Im Verfahrensschritt S10 wählt der Teilnehmer A von einem Endgerät, das zur Nebenstellenanlage 10 gehört, die einem Endgerät des Teilnehmers B zugewiesene Nummer. Dieses Endgerät gehört zur Nebenstellenanlage 16.

Im Schritt S12 wird die gewählte Nummer mit Hilfe des Nummernplanes analysiert, d.h. die Nebenstellenanlage 10 stellt fest, zu welcher Nebenstellenanlage die gewählte Nummer gehört. Die Abfrage S14 fällt negativ aus, wenn die gewählte Nummer zu einem Endgerät innerhalb der Nebenstellenanlage 10 gehört und es wird zum Abschnitt I verzweigt. Im Schritt S18 wird dann eine Verbindung zu einem Endgerät der Nebenstellenanlage 10 aufgebaut. Dazu wird ein Protokoll benutzt, das festlegt, wie ein Verbindungsaufbau und ein Verbindungsabbau zu erfolgen haben. Mit diesem Protokoll wird auch bestimmt, welche Dienstmerkmale die Nebenstellenanlagen 10 und 16 zur Verfügung stellen. Ein Beispiel für ein solches Dienstmerkmal ist die bereits erwähnte Rufweiterleitung. d.h. ein Teilnehmer kann die Nebenstellenanlage anweisen, alle Anrufe, die zu einem bestimmten Endgerät gehen, auf ein anderes Endgerät weiterzuleiten.

Fällt die Abfrage S14 positiv aus, sendet die Nebenstellenanlage 10 über die Verbindung 20 an den Emulator 22 einen Protokollaufruf, der den Emulator 22 anweist, eine Verbindung zur Nebenstellenanlage 16 herzustellen (Schritt S16). Mit dem Protokollaufruf wird ein Programm gestartet, das eine vom Protokoll vorgegebene Funktion übernimmt. Beispiel für ein solches Protokoll ist bereits erwähnte QSIG-Protokoll. Weitere bekannte Protokolle sind CorNet-N oder DPNSS.

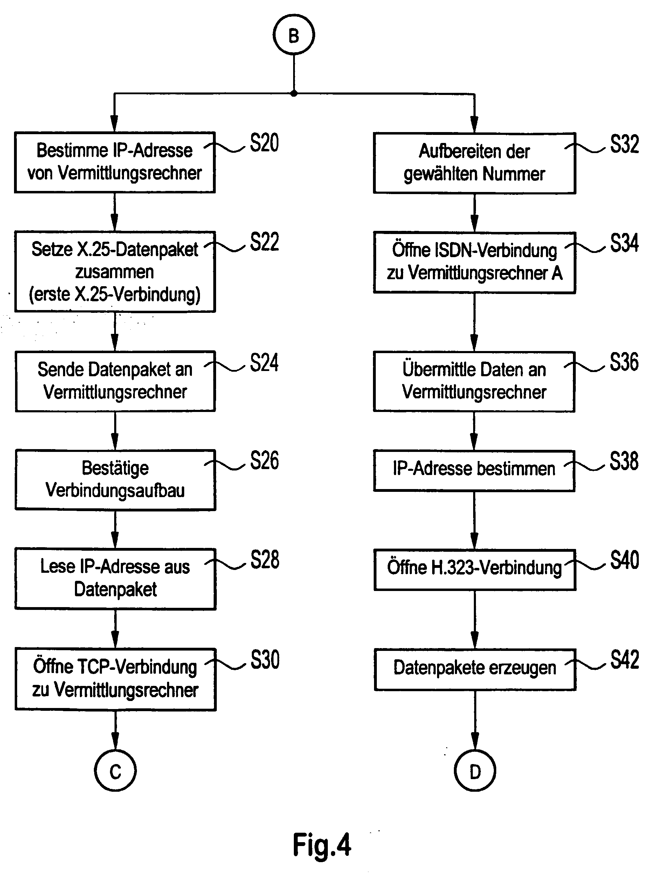

Figur 4 zeigt den Ablauf der Schritte mit denen die Verbindungen zwischen dem Emulator 22 und dem Vermittlungsrechner 28 und die Verbindungen zwischen den Vermittlungsrechnern 28 und 34 hergestellt werden. Der Aufbau der Verbindungen für den Transport der Steuerdaten (Schritte S20 bis S30) und der Aufbau der Verbindungen für den Transport der Nutzdaten (Schritte S32 bis S42) erfolgt dabei annähernd gleichzeitig.

Der Emulator 22 bestimmt im Schritt S20 anhand der Nebenstellenanlage 16, zu der bei diesem Beispiel die Verbindung hergestellt werden soll, die Adresse des Emulators 40 und die Adresse des Vermittlungsrechners 34. Diese Adressen werden benötigt, um die Steuerdaten durch das Rechnerverbundnetz 14 und vom Vermittlungsrechner 34 zum Emulator 40 leiten zu können. Die Adresse des Vermittlungsrechners 34 ist seine IP-Adresse. Mit diesen Informationen setzt der Emulator 22 im Schritt S22 ein Datenpaket zusammen, mit dem die Verbindung 24 zum Vermittlungsrechner 28 aufgebaut wird. Bei dieser Verbindung 24 handelt es sich um eine X.25-Verbindung.

Im Verfahrensschritt S24 wird das Datenpaket an den Vermittlungsrechner 28 geschickt. Der Vermittlungsrechner 28 muß den Aufbau der Verbindung 24 bestätigen (Schritt S26). Im Schritt S28 liest der Vermittlungsrechner 28 die IP-Adresse des Vermittlungsrechners 34, so daß mit Schritt S30 die Verbindung 30 im Rechnerverbundnetz 14 hergestellt werden kann. Für den Datenaustausch über die Verbindung 30 wird das bekannte Transmission Control Protocol TCP angewendet.

Die nachfolgend beschriebenen Schritte S32 bis S42 laufen annähernd gleichzeitig zu den gerade beschriebenen Schritten S20 bis S30 ab. Im Ablaufschritt S32 wird die gewählte Nummer so aufbereitet, daß der Vermittlungsrechner 28 die IP-Adresse des Vermittlungsrechners 34 anhand der aufbereiteten Nummer bestimmen kann. Diese aufbereitete Nummer besteht, wie bereits weiter oben erwähnt, aus der gewählten Nummer, ergänzt um eine Länderkennzahl und eine Ortsnetzkennzahl.

Im Ablaufschritt S34 öffnet der Emulator 22 die Verbindung 26 zum Vermittlungsrechner 28. Bei der Verbindung 26 handelt es sich um eine ISDN-Verbindung. Im Schritt S36 werden die schon vorhandenen Nutzdaten an den Vermittlungsrechner 28 übermittelt. Zu den Nutzdaten gehört auch die aufbereitete Nummer, aus der im Schritt S38 die IP-Adresse des Vermittlungsrechners 34 bestimmt wird. Nun kann der Vermittlungsrechner 28 die Verbindungen 32 zum Vermittlungsrechner 34 öffnen (Schritt S40). Über diese Verbindungen 32 werden die Nutzdaten durch das Rechnerverbundnetz 14 übertragen. Die Anzahl der Verbindungen 32 hängt von der Menge der Nutzdaten ab, die zu übermitteln sind. Für die Datenübertragung kann jedes Protokoll benutzt werden, das für die Übertragung von Sprachdaten über ein paketvermittelndes Rechnerverbundnetz geeignet ist, z.B. das bekannte H.323-Protokoll oder das sogenannte Real Time Protocol. Im Schritt S42 werden die Datenpakete entsprechend dem Internet Protocol IP erzeugt.

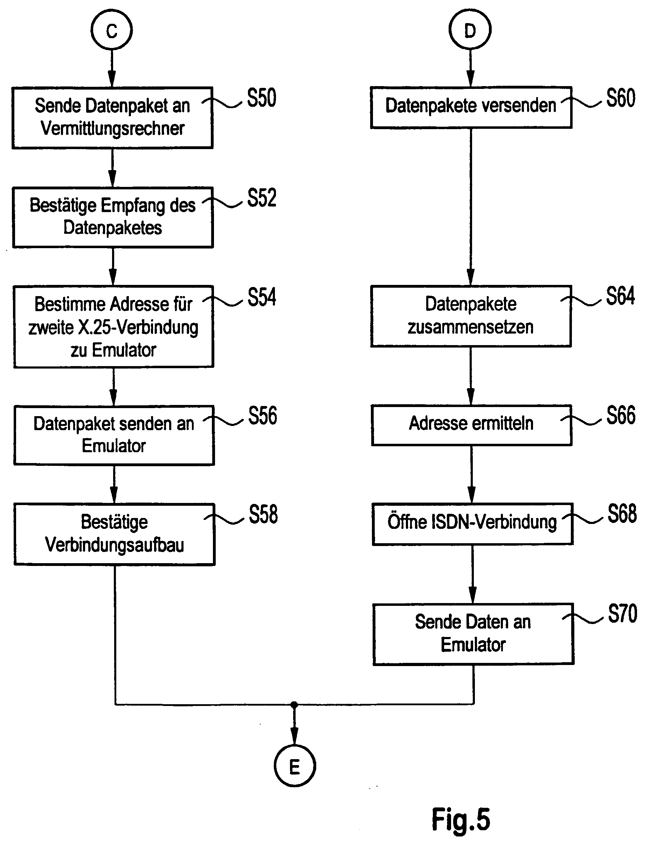

Figur 5 stellt die Ablaufschritte bis zum Aufbau der Verbindungen zum Emulator 40 dar. Die Schritte S50 bis S58 betreffen die Übertragung der Steuerdaten und die Schritte S60 bis S70 die Übertragung der Nutzdaten.

Im Ablaufschritt S50 sendet der Vermittlungsrechner 28 die Datenpakete mit den Steuerdaten an den Vermittlungsrechner 34, der den korrekten Empfang der Datenpakete dem Vermittlungsrechner 28 bestätigt (Schritt S52). Diese Bestätigung ist durch das Transmission Control Protocol TCP vorgegeben. Im Verfahrensschritt S54 setzt der Vermittlungsrechner 34 die Datenpakete wieder zusammen und bestimmt die Adresse des Emulators 40. Anschließend öffnet er eine Verbindung 36 zum Emulator 40 und sendet die Steuerdaten an den Emulator 40 (Schritt S56). Für die Übertragung der Steuerdaten über die Verbindung 36 wird das X.25-Protokoll benutzt. Im Schritt S58 bestätigt der Emulator 40 dem Vermittlungsrechner 34 den Aufbau der Verbindung 36.

Zu diesen Schritten S50 bis S58 parallel verschickt im Schritt S60 der Vermittlungsrechner 28 die Datenpakete mit den Nutzdaten über das Rechnerverbundnetz 14 an den Vermittlungsrechner 34.

Der Vermittlungsrechner 34 setzt die empfangenen Datenpakete mit den Nutzdaten wieder zusammen (Schritt S64) und ermittelt aus den übertragenen Daten die Adresse des Emulators 40 (Schritt S66). Mit dieser Adresse wird die Verbindung 38 zum Emulator 40 hergestellt (Schritt S68), bei der es sich um eine ISDN-Verbindung handelt, für die das öffentliche Telefonnetz benutzt wird. Im Verfahrensschritt S70 kann der Vermittlungsrechner 34 die Nutzdaten an den Emulator 40 senden.

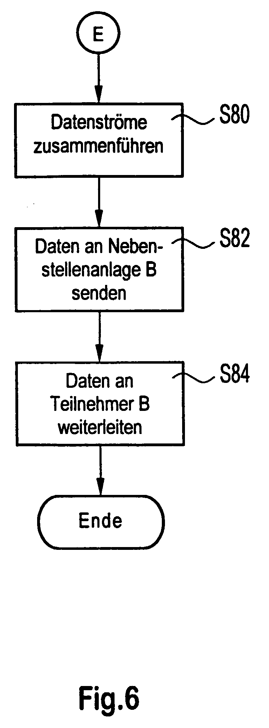

In Figur 6 sind die abschließenden Schritte des Verbindungsaufbaus dargestellt. Der Emulator 40 führt im Verfahrensschritt S80 die Steuerdaten und die Nutzdaten wieder zusammen und leitet sie über die Verbindung 42 an die Nebenstellenanlage 16 weiter (Schritt 82). Im Schritt S84 übermittelt die Nebenstellenanlage 16 die Daten an das Endgerät, dessen Nummer vom Teilnehmer A gewählt worden war.

## Patentansprüche

1. Verfahren zum Übermitteln von Daten von einer ersten Nebenstellenanlage (10) über ein Rechnerverbundnetz (14) zu einer zweiten Nebenstellenanlage (16) bei dem
a) von einem rufenden Teilnehmer der ersten Nebenstellenanlage (10) an einen gerufenen Teilnehmer der zweiten Nebenstellenanlage (16) zu übermittelnde Daten von einem ersten Umsetzer (22) in Nutzinformationen und Verbindungsaufbauinformationen enthaltende Nutzdaten und in Steuerdaten zur Steuerung der zweiten Nebenstellenanlage (16) aufgeteilt werden,
b) aus den Verbindungsaufbauinformationen eine Zieladressinformation ermittelt wird, die eine Empängereinrichtung identifiziert,
c) die Nutzdaten und Steuerdaten von einer der ersten Nebenstellenanlage (10) zugeordneten, ersten Vermittlungseinheit (28) in Datenpakete umgesetzt werden, die über das Rechnerverbundnetz (14) an die durch die Zieladressinformation bezeichnete Empängereinrichtung übermittelt werden, in der
d) die Datenpakete von einer der zweiten Nebenstellenanlage (16) zugeordneten, zweiten Vermittlungseinheit (34) empfangen, in Nutzdaten und Steuerdaten umgesetzt und an einen zweiten Umsetzer (40) weitergeleitet werden, und
e) die Nutzdaten und Steuerdaten vom zweiten Umsetzer (40) zu Daten zusammengeführt werden, die durch die zweite Nebenstellenanlage (16) weiterverarbeitet werden.

2. Verfahren nach Anspruch 1,
**dadurch gekennzeichnet,**
daß die Verbindungsaufbauinformationen mit Hilfe eines der ersten Nebenstellenanlage (10) zugeordneten Nummernplans erstellt werden, in dem die Teilnehmer der Nebenstellenanlagen (10, 16) sowie für jeden Teilnehmer die diesem jeweils zugeordnete Nebenstallenanlage vermerkt sind.

3. Verfahren nach Anspruch 1 oder 2,
**dadurch gekennzeichnet,**
daß als Rechnerverbundnetz (14) ein Internet oder ein Intranet verwendet wird.

4. Verfahren nach einem der vorhergehenden Ansprüche,
**dadurch gekennzeichnet,**
daß zur Erzeugung der Datenpakte das Internet Protocol (IP) benutzt wird.

5. Verfahren nach einem der vorhergehenden Ansprüche,
**dadurch gekennzeichnet,**
daß die Nutzdaten und Steuerdaten über getrennte Kanäle des Rechnerverbundnetzes (14) übermittelt werden.

6. Verfahren nach einem der vorhergehenden Ansprüche,
**dadurch gekennzeichnet,**
daß die Nutzdaten über mindestens zwei Kanäle (32) des Rechnerverbundnetzes (14) übertragen werden.

7. Verfahren nach einem der vorhergehenden Ansprüche,
**dadurch gekennzeichnet,**
daß der erste Umsetzer (22) die Steuerdaten über eine erste Verbindung (24) und die Nutzdaten über eine von der ersten Verbindung getrennten zweiten Verbindung (26) an die erste Vermittlungseinheit überträgt.

8. Verfahren nach einem der vorhergehenden Ansprüche,
**dadurch gekennzeichnet,**
daß bereits der erste Umsetzer (22) die Steuerdaten in Datenpakete aufteilt und diese der ersten Vermittlungseinheit (28) zuführt.

9. Verfahren nach einem der vorhergehenden Ansprüche,
**dadurch gekennzeichnet,**
daß zur Erzeugung der Datenpakte das X.25-Protokoll verwendet wird.

10. Verfahren nach einem der vorhergehenden Ansprüche,
**dadurch gekennzeichnet,**
daß zur Übertragung der Nutzdaten ein durch das ISDN, Euro-ISDN oder T1-Protokoll oder ein Protokoll zur analogen Sprachübertragung festgelegtes Verfahren angewendet wird.

11. Verfahren nach einem der vorhergehenden Ansprüche,
**dadurch gekennzeichnet,**
daß die Steuerdaten Dienstmerkmale entsprechend dem CorNet-N-, DPNSS- oder QSIG-Protokoll beschreiben.

12. Verfahren nach einem der vorhergehenden Ansprüche,
**dadurch gekennzeichnet,**
daß aus den Datenpaketen Datenblöcke gemäß dem HDLC-Protokoll gebildet werden und daß die Datenblöcke durch Symbole gekennzeichnet werden.

13. Verfahren nach einem der vorhergehenden Ansprüche,
**dadurch gekennzeichnet,**
daß der zweite Umsetzer (40) den ersten Umsetzer (22) mit einer DDI-Nummer identifiziert.

14. Verfahren nach einem der vorhergehenden Ansprüche in Verbindung mit Anspruch 2,
**dadurch gekennzeichnet,**
daß der Nummernplan für jeden Umsetzer eine eindeutige DDI-Nummer enthält, und der erste Umsetzer (22), die ihm zugeordnete DDI-Nummer an den zweiten Umsetzer (40) schickt.

15. Verfahren nach einem der vorhergehenden Ansprüche in Verbindung mit Anspruch 2,
**dadurch gekennzeichnet,**
daß der Nummernplan für jede Kombination aus rufendem und angerufenem Umsetzer eine DDI-Nummer enthält, und der erste Umsetzer (22) diese Nummer an den zweiten Umsetzer (40) schickt.

16. Telekommunikationssystem zum Übermitteln von Daten von einer ersten Nebenstellenanlage (10) über ein Rechnerverbundnetz (14) zu einer zweiten Nebenstellenanlage (16), bei dem
a) jede Nebenstellenanlage (10, 16) einen Nummernplan aufweist, in welchem sämtliche Teilnehmer des Telekonmmunikationssystems sowie die einem jeden Teilnehmer zugeordnete Nebenstellenanlage vermerkt sind,
b) der ersten Nebenstellenanlage (10) ein erster Umsetzer (22) zugeordnet ist,
durch den die von einem rufenden Teilnehmers der ersten Nebenstellenanlage (10) an einen gerufenen Teilnehmer der zweiten Nebenstellenanlage (16) zu übermittelnden Daten in Nutzdaten, welche Nutzinformationen und Verbindungsaufbauinformationen gemäß dem Nummernplan enthalten, und in Steuerdaten zum Steuern der zweiten Nebenstallenanlage aufzuteilen sind, und
durch den aus den Verbindungsaufbauinformationen eine Zieladressinformation zu ermitteln ist, die eine Empängereinrichtung identifiziert,
c) der ersten Nebenstellenanlage (10) eine erste Vermittlungseinheit (28) zum Umsetzen der Nutzdaten und Steuerdaten in Datenpakete und zum Übermitteln der Datenpakete über das Rechnerverbundnetz (14) an die durch die Zieladressinformation bezeichnete Empängereinrichtung zugeordnet ist,
d) der zweiten Nebenstellenanlage (16) eine zweite Vermittlungseinheit (34) zum Umsetzen der von der ersten Vermittlungseinheit (28) empfangenen Datenpakete in Nutzdaten und Steuerdaten zugeordnet ist, und
e) der zweiten Nebenstellenanlage (16) ein zweiter Umsetzer (40) zum Zusammenführen der von der zweiten Vermittlungseinheit (34) umgesetzten Nutzdaten und Steuerdaten zu durch die zweite Nebenstellenanlage (16) weiterzuverarbeitenden Daten zugeordnet ist.

17. Telekommunikationssystem nach Anspruch 16,
**dadurch gekennzeichnet,**
daß als Rechnerverbundnetz (14) ein Internet oder ein Intranet verwendet wird.

18. Telekommunikationssystem nach Anspruch 16 oder 17,
**dadurch gekennzeichnet,**
daß zur Erzeugung der Datenpakte das Internet Protocol (IP) benutzt wird.

19. Telekommunikationssystem nach einem der Ansprüche 16 bis 18,
**dadurch gekennzeichnet,**
daß die Nutzdaten und Steuerdaten über getrennte Kanäle des Rechnerverbundnetzes (14) übermittelt werden.
